# EUROPEAN PATENT APPLICATION

(11) **EP 4 810 422 A1**
(43) Date of publication of application: **23.09.2026**
(21) Application number: 26161522.3
(22) Date of filing: 02.03.2026
(51) Int. Cl.: B65H 5/38, B65H 1/04, B65H 3/06

(54) **DOCUMENT CONVEYING DEVICE**

(30) Priority: 17.03.2025 JP 2025042479
(71) Applicant: KYOCERA Document Solutions Inc., Osaka-shi, Osaka 540-8585 (JP)
(72) Inventor: HIBINO, Risa, Osaka-shi, Osaka, 540-8585 (JP); TOKORO, Yoshitaka, Osaka-shi, Osaka, 540-8585 (JP)
(74) Representative: Becker Kurig & Partner Patentanwälte mbB

(57) **Abstract**

A document conveying device (120) comprises a document feed tray (44), a pickup roller (51), a conveying guide (61G) and a projection portion (91). On the document feed tray, a document (G) is stacked. The pickup roller picks up the document stacked on the document feed tray in a predetermined conveyance direction (Z). The conveying guide is provided at a downstream side of the pickup roller in the conveyance direction and faces to a recording surface of the document. The projection portion has a shape projected from the conveying guide and contacts a part of the recording surface of the small-sized document including both ends of a width direction (W) intersecting the conveyance direction (Z).

## Description

### BACKGROUND

The present disclosure relates to a document conveying device.

A document conveying device for conveying a document via a reading position of an image reading device is known. For example, a conventional document conveying device includes a document feed tray on which documents are stacked, an ejection tray on which the document is ejected, a conveying path from the document feed tray to the ejection tray via a reading position, and a pickup roller for picking up the document from the document feed tray to the conveying path.

In a conventional document conveying device, a technique for conveying a small-sized hard document, such as a business card, an identification card, or an IC card, has been proposed. For example, in the document conveyance device, a conveying path length between a position where a second image reading device reads the document in a straight conveying path and a position where the conveyed document contacts a platen plate is set to be larger than a predetermined document length in a conveyance direction of the small-sized hard document that can be conveyed. Alternatively, the document conveying device is provided with a first guide member provided from a document placing tray toward the platen, an opening opened in a part of the first guide member for guiding the card document conveyed from the document placing tray onto the first guide member below the first guide member, and a second guide member for guiding the card document guided below the first guide member from the opening toward the platen.

Incidentally, in a case of conveying the small-sized hard document, the document may be damaged due to friction between the document and a conveying guide facing to a recording surface of the document, but, in the conventional document conveying device, measures against such problem have not been shown. Further, there is a possibility that a posture of the document fed out from the document feed tray may be disturbed when the document enters the conveying guide, but, in the conventional document transport apparatus, measures against such problem have not been shown.

### SUMMARY

A document conveying device in accordance with the present disclosure comprises a document feed tray, a pickup roller, a conveying guide and a projection portion. On the document feed tray, a document is stacked. The pickup roller picks up the document stacked on the document feed tray in a predetermined conveyance direction. The conveying guide is provided at a downstream side of the pickup roller in the conveyance direction and faces to a recording surface of the document. The projection portion has a shape projected from the conveying guide and contacts a part of the recording surface of the small-sized document including both ends of a width direction intersecting the conveyance direction.

### BRIEF DESCRIPTION OF THE DRAWINGS

FIG. 1 is a front view schematically showing internal structure of an image forming apparatus according to an embodiment of the present disclosure.
FIG. 2 is a perspective view showing a document conveying device according to the embodiment of the present disclosure.
FIG. 3 is a perspective view showing the document conveying device, in a state a conveying guide at a lower side is exposed, according to the embodiment of the present disclosure.
FIG. 4 is a plan view showing the document conveying device, in the state the conveying guide at the lower side is exposed, according to the embodiment of the present disclosure.
FIG. 5 is a front view showing internal structure of the document conveying device according to the embodiment of the present disclosure.
FIG. 6 is a front view showing a document feed tray lifting mechanism of the document conveying device according to the embodiment of the present disclosure.
FIG. 7 is a front view showing a document feeding mechanism and a first conveying path of the document conveying device according to the embodiment of the present disclosure.
FIG. 8 is a front view showing the first conveying path of the document conveying device according to the embodiment of the present disclosure.
FIG. 9 is an exploded view showing a fixed wall portion and a lifted wall portion in the document conveying device according to the embodiment of the present disclosure.
FIG. 10 is a perspective view showing the fixed wall portion and the lifted wall portion (at a lower limit position) in the document conveying device according to the embodiment of the present disclosure.
FIG. 11 is a perspective view showing the fixed wall portion and the lifted wall portion (at an upper limit position) in the document conveying device according to the embodiment of the present disclosure.
FIG. 12 is a perspective view showing the fixed wall portion, the lifted wall portion (at the lower limit position), and the document feed tray (in an engaged state) in the document conveying device according to the embodiment of the present disclosure.
FIG. 13 is a perspective view showing the fixed wall portion, the lifted wall portion (at the upper limit position), and the document feed tray (in the engaged state) in the document conveying device according to the embodiment of the present disclosure.
FIG. 14 is a perspective view showing the fixed wall portion, the lifted wall portion (at the upper limit position), and the document feed tray (in a separated state) in the document conveying device according to the embodiment of the present disclosure.
FIG. 15 is a perspective view showing the lifted wall portion and a cross section of a front portion of the document feed tray in the document conveying device according to the embodiment of the present disclosure.
FIG. 16 is a perspective view showing a recess portion and a rib in the document conveying device according to the embodiment of the present disclosure.
FIG. 17 is a perspective view showing a cross section of the rib in the document conveying device according to the embodiment of the present disclosure.
FIG. 18 is a plan view showing a projection portion in the document conveying device according to the embodiment of the present disclosure.
FIG. 19 is a perspective view showing the projection portion in the document conveying device according to the embodiment of the present disclosure.
FIG. 20 is a perspective view showing a cross section of the projection portion in the document conveying device according to the embodiment of the present disclosure.
FIG. 21 is a perspective view showing a cross section of the projection portion in the document conveying device according to the embodiment of the present disclosure.

### DETAILED DESCRIPTION

In the following, a document conveying device 120 and an image forming apparatus 100 according to an embodiment of the present disclosure will now be described with reference to the accompanying drawings.

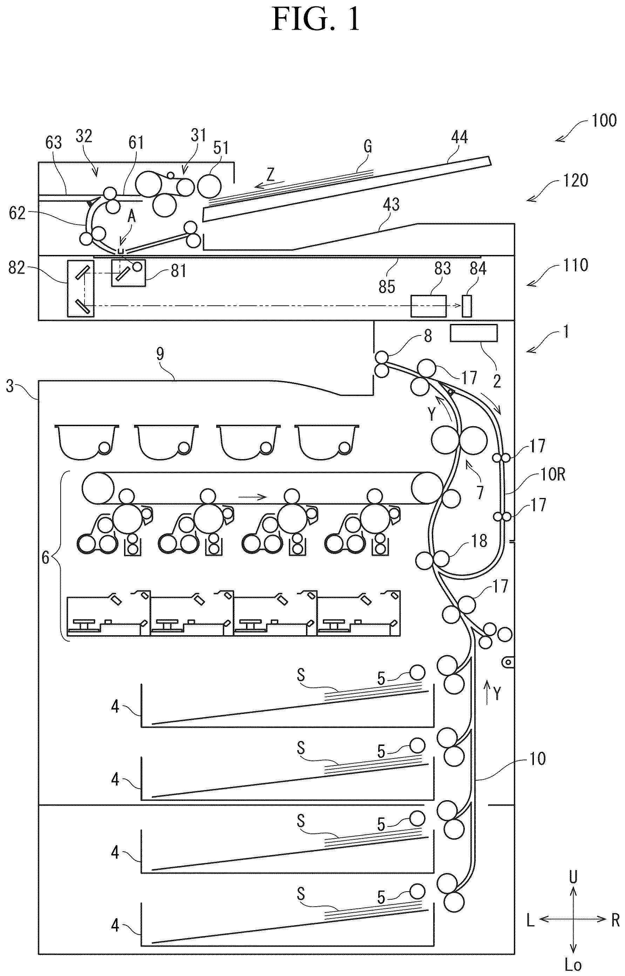

FIG. 1 is a front view schematically showing internal structure of the image forming apparatus 100. In each drawing, U, Lo, L, R, Fr and Rr indicate an upper side, a lower side, a left side, a right side, a front side and a rear side, respectively. Incidentally, such directions are only defined for convenience of explanation.

The image forming apparatus 100 comprises a printing device 1, a document reading device 110, and a document conveying device 120. Above the printing device 1, the document reading device 110 is provided, and, above the document reading device 110, the document conveying device 120 is provided. The document conveying device 120 conveys a document G via a reading position A of the document reading device 110. The document reading device 110 is a flatbed type image scanner and reads the document G to generate image data. The printing device 1 forms an image based on the image data on a sheet S. Although the present embodiment shows an example in which the printing device 1 forms the image by an electrophotographic system, the printing device 1 may be configured to form the image by another system (For example, an inkjet system).

The printing device 1 includes a rectangular parallelepiped main body housing 3. At a lower portion of the inside of the main body housing 3, a sheet feed cartridge 4 in which the sheet S is stacked and a sheet feeding roller 5 for feeding the sheet S rightward from the sheet feed cartridge 4 are provided. Above the sheet feed cartridge 4, an image forming device 6 for forming a toner image by an electrophotographic system is provided, and, at a right upper side of the image forming device 6, a fixing device 7 for fixing the toner image to the sheet S is provided. Above the fixing device 7, an ejecting roller 8 for ejecting the sheet S on which the toner image is fixed and an ejection tray 9 on which the ejected sheet S is stacked are provided.

Inside the main body housing 3, a conveying path 10 is provided from the sheet feeding roller 5 through the image forming device 6 and the fixing device 7 to the ejecting roller 8. In the conveying path 10, conveying rollers 17 for holding and conveying the sheet S are provided at a plurality of locations in a conveyance direction Y. At an upstream side of the image forming device 6 in the conveyance direction Y, a register roller 18 is provided. At the right side of the fixing device 7, an inverted conveying path 10R is provided which branches from the conveying path 10 at a downstream side of the fixing device 7 in the conveyance direction Y and rejoins the conveying path 10 at an upstream side of the register roller 18 in the conveyance direction Y.

The control unit 2 includes an arithmetic unit and a storage unit (not shown). The arithmetic unit is, for example, a CPU (Central Processing Unit). The storage unit includes a storage medium, such as ROM (Read Only Memory), RAM (Random Access Memory), and EEPROM (Electrically Erasable Programmable Read Only Memory). The arithmetic unit executes various processes by reading and executing control program stored in the storage unit. The control unit 2 may be realized only by an integrated circuit without using software.

In front of the document reading device 110, a display operation unit (not shown) is provided. The display operation unit includes a display panel, a touch panel provided superposed on a display surface of the display panel, and a keypad adjacent to the display panel (not shown). The control unit 2 causes the display panel to display a screen representing an operation menu, status, and the like of the image forming apparatus 100, and controls each component of the image forming apparatus 100 according to operation detected by the touch panel and the keypad.

A basic image forming action of the printing device 1 is as follows. When a print job of single-sided printing is inputted to the printing device 1 from a display operation unit or an external computer, the sheet feeding roller 5 feeds the sheet S from the sheet feed cartridge 4 to the conveying path 10, the register roller 18 whose rotation is stopped corrects skew of the sheet S, and the register roller 18 feeds the sheet S to the image forming device 6 at a predetermined timing. An image forming device 6 forms the toner image on the sheet S by an electrophotographic system. Subsequently, the fixing device 7 fuses the toner image while holding and conveying the sheet S to fix the toner image to the sheet S, and the ejecting roller 8 ejects the sheet S to the ejection tray 9. In a case of double-sided printing, the sheet S having the toner image fixed on a first surface is fed to the conveying path 10 via the inverted conveying path 10R, whereby the toner image is transferred to a second surface.

### <Document Reading Device>

The document reading device 110 includes a first carriage 81 having a light source and a reflecting mirror, a second carriage 82 having two reflecting mirrors, a lens 83 for forming an image of light, an imaging element 84 for converting the formed light into image data, and a contact glass 85 on which the document G is placed.

A basic document reading action of the document reading device 110 is as follows. When a user places the document G on an upper surface of the contact glass 85 and gives a reading instruction to the document reading device 110, the second carriage 82 moves rightward at a speed V/2 in conjunction with the rightward movement of the first carriage 81 at a speed V. Meanwhile, the light source irradiates the document G with light, and the reflected light reflected by the document G is reflected by the reflecting mirror of the first carriage 81 and the reflecting mirrors of the second carriage 82, guided to the lens 83, formed on the image element 84, and converted into an image signal. The image signal is output to the control unit 2 of the printing device 1 and converted into image data.

### <Document Conveying Device>

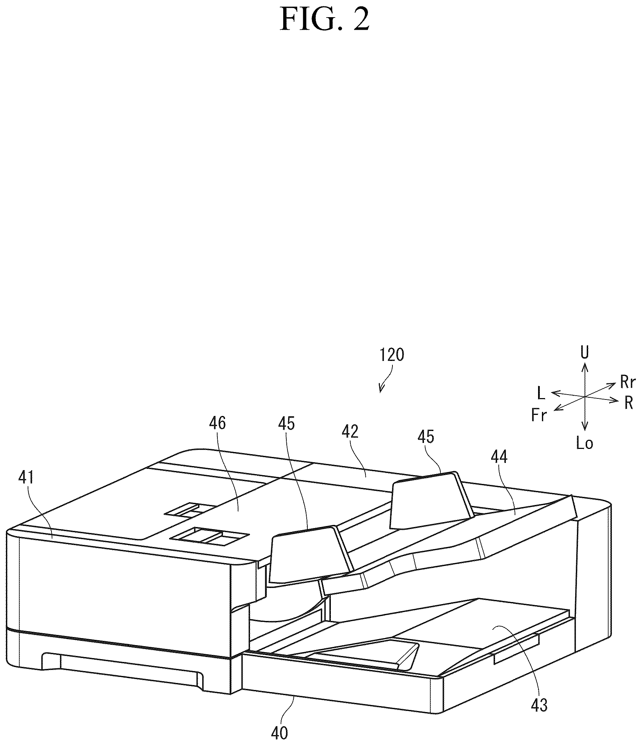

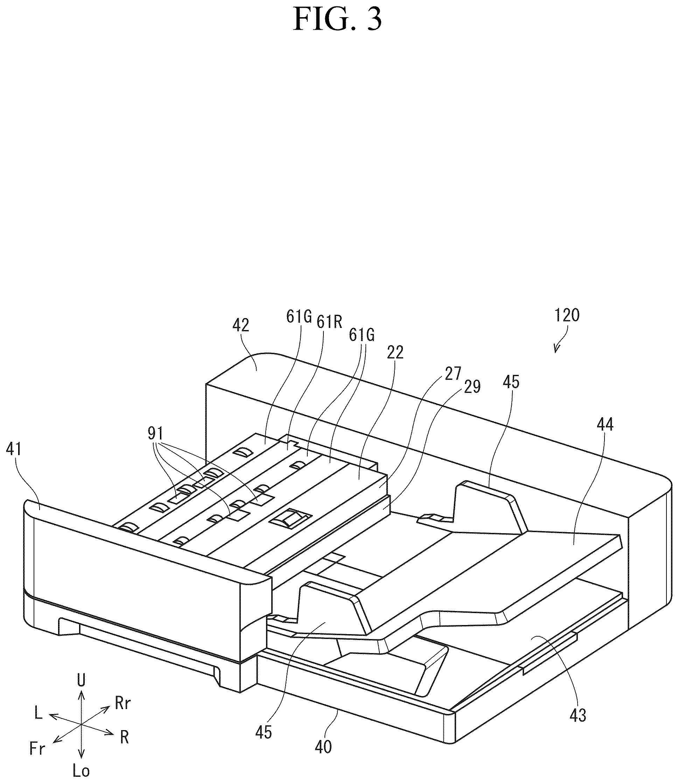

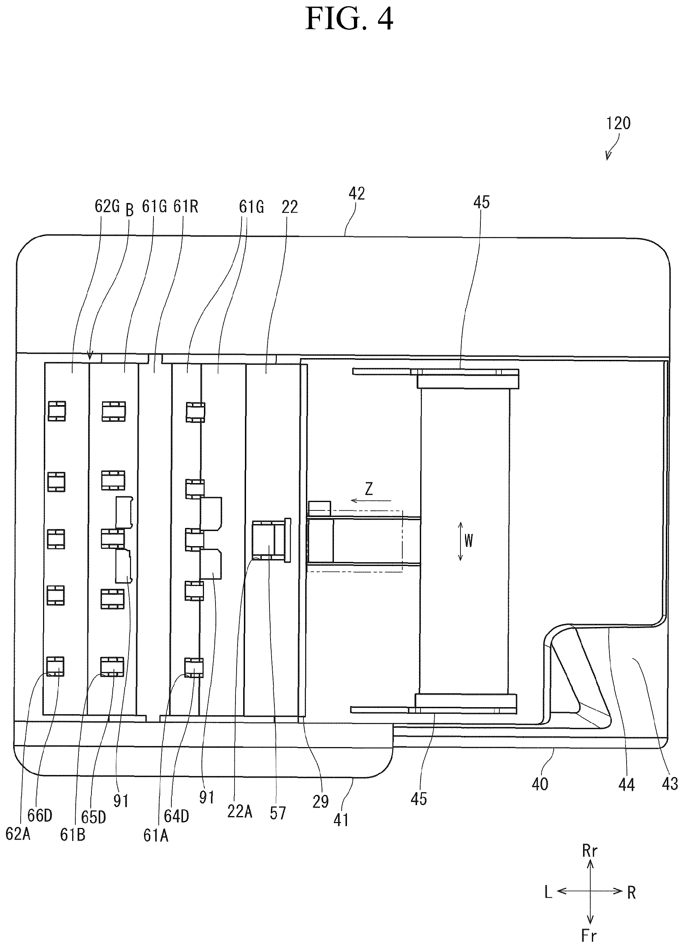

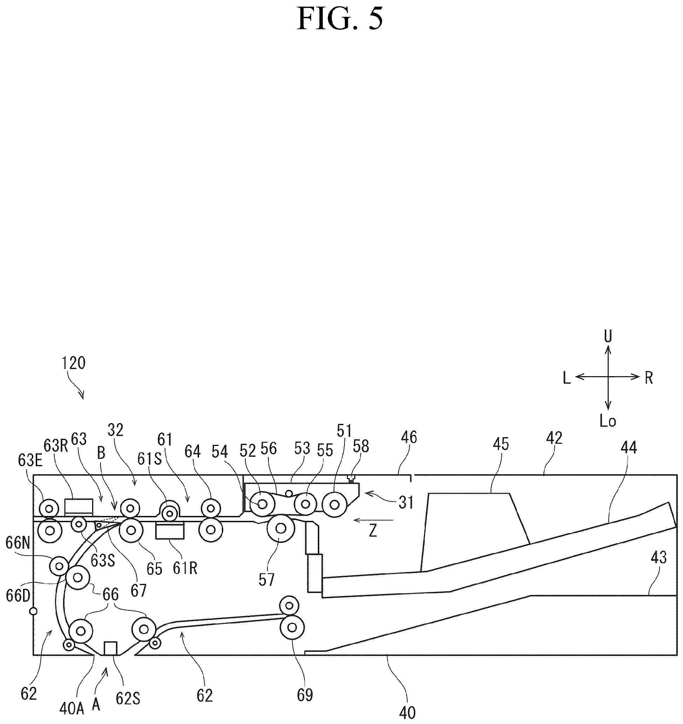

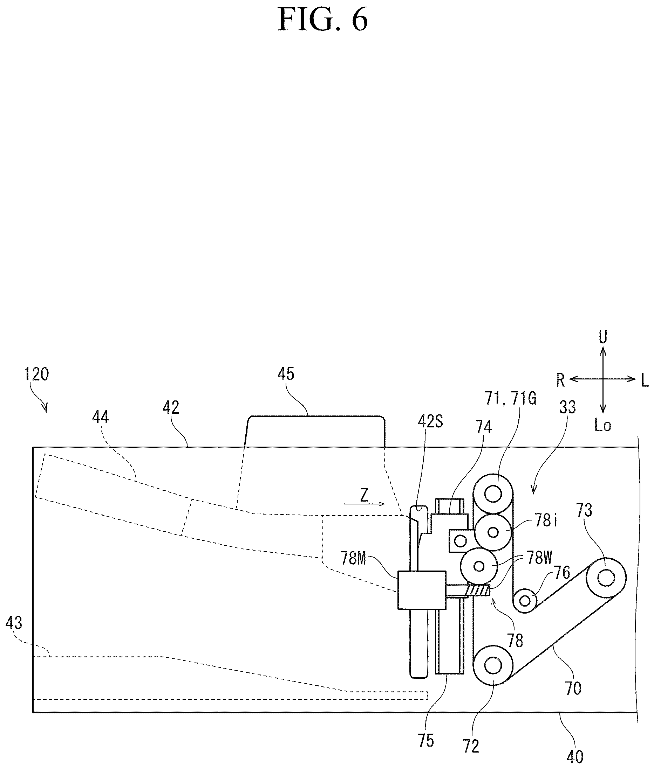

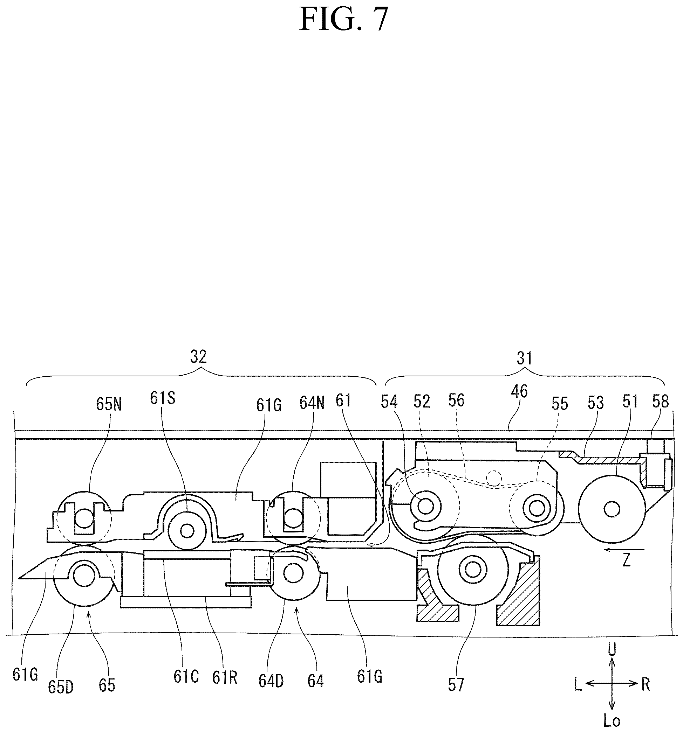

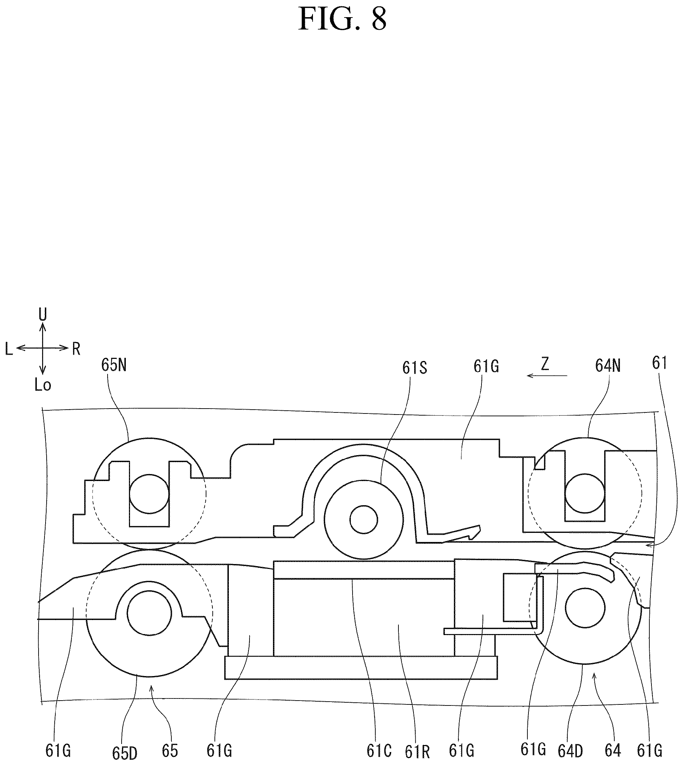

FIG. 2 is a perspective view showing the document conveying device 120. FIG. 3 is a perspective view showing the document conveying device 120, in a state a conveying guide 61G at a lower side is exposed. FIG. 4 is a plan view showing the document conveying device 120, in the state the conveying guide 61G at the lower side is exposed. FIG. 5 is a front view showing internal structure of the document conveying device 120. FIG. 6 is a front view showing a document feed tray lifting mechanism 33 of the document conveying device 120. FIG. 7 is a front view showing a document feeding mechanism 31 and a first conveying path 61 of the document conveying device 120. FIG. 8 is a front view showing the first conveying path 61 of the document conveying device 120.

The document conveying device 120 (see FIGs. 2 to 5) has a bottom portion 40, a first wall portion 41, and a second wall portion 42. The bottom portion 40 is formed in a flat shape and is generally rectangular. The first wall portion 41 and the second wall portion 42 face to each other in front and rear directions (a width direction W intersecting the conveyance direction Z of the document G). A rear edge part of the bottom portion 40 is hinge-connected to a rear part of the contact glass 85 (see FIG. 1) of the document reading device 110. The bottom portion 40 also has a function of pressing the document G on the contact glass 85. The first wall portion 41 extends from a left end part to a center part of a front edge part of the bottom portion 40. The second wall portion 42 is provided over an entire area of the rear edge part of the bottom portion 40. The cover portion 46 covers an upper part and a left part of a space between the first wall portion 41 and the second wall portion 42. A left lower end part of the cover portion 46 is hinge-connected to the left end part of the bottom portion 40.

An opening 40A (see FIG. 5) is a slit formed in a region of the bottom portion 40 facing to the first carriage 81 (see FIG. 1) located at a home position, and a longitudinal direction thereof is the front and rear directions. The opening 40 A is an example of the reading position A at which the document reading device 110 reads the document G.

### <Document Feed Tray >

The document feed tray 44 (see FIGs. 2 to 6) is provided on the right side of a center of the document conveying device 120 in left and right directions and on the front side of the second wall portion 42. The document feed tray 44 is inclined so as to be lower on the left side. On an upper surface of the document feed tray 44, a pair of cursors 45 for aligning front and rear ends of the document G are provided. The pair of cursors 45 interlock with each other in an opposite direction and slide equidistantly, for example, by a rack and pinion mechanism (not shown). The pair of cursors 45 are positioned so as to always maintain the same distance from a center of a stacking surface of the document feed tray 44 in the front and rear directions. Therefore, by bringing the pair of cursors 45 into contact with ends of the document G in the front and rear directions, the center of the document G in the front and rear directions coincides with the center of the document feed tray 44 in the front and rear directions.

### <Ejection Tray>

The ejection tray 43 is provided below the document feed tray 44. The ejection tray 43 is provided on an upper surface of the bottom portion 40.

### <Document Feeding Mechanism >

The document feeding mechanism 31 (See FIGs. 5 and 7) is provided in the space between the first wall portion 41 and the second wall portion 42. The document feeding mechanism 31 is provided with a box-shaped holder 53 whose lower part is opened. Inside the holder 53, a pickup roller 51, a driven roller 55, a driving roller 52, and a retard roller 57 are arranged in an axial direction as the front and rear directions. The driven roller 55 is provided to the left side of the pickup roller 51. The driving roller 52 is provided to the left side of the driven roller 55. An endless belt 56 is wound around the driving roller 52 and the driven roller 55. The retard roller 57 is pressed against an outer surface of the lower part of the endless belt 56.

Both front and rear ends of a drive shaft 54 of the driving roller 52 are supported by the first wall portion 41 and the second wall portion 42, and are connected to a drive section (not shown) including a motor and a reduction gear. The holder 53 is supported by the drive shaft 54 and is swingable around the drive shaft 54. Driving force is transmitted from the drive shaft 54 to the pickup roller 51 and the retard roller 57 through a transmission mechanism (not shown) such as a gear train and an endless belt.

A sensor 58 is a transmission type or reflection type optical sensor and is provided on an inner surface of the cover portion 46. The sensor 58 outputs a detection signal having a different level to the control part 2 when the holder 53 blocks light of the sensor 58 and when it does not.

### <Document Feed Tray Lifting Mechanism>

The document feed tray lifting mechanism 33 (see FIG. 6) is provided on the second wall portion 42. A driving pulley 71 is provided at an upper part of a center part of the second wall portion 42 in the left and right directions. A driven pulley 72 is provided below the driving pulley 71. A driven pulley 73 is provided at the lower left side of the driving pulley 71 and at the upper left side of the driven pulley 72. A guide pulley 76 is provided at the upper left side of the driven pulley 72 and at the right side of the driven pulley 73. An endless belt 70 is wound around the driving pulley 71, the driven pulleys 72 and 73 and the guide pulley 76. The driving section 78 includes a motor 78M, a worm gear 78W, an idler gear 78i, and a driving gear 71G. The driving gear 71G is provided on a shaft common to the driving pulley 71.

A sliding portion 74 is provided on a left end of a rear edge of the document feed tray 44. The second wall portion 42 is provided with a slit 42S whose longitudinal direction is upper and lower directions. The slit 42S is provided at a position corresponding to a left end part of the rear edge part of the document feed tray 44. The sliding portion 74 penetrates the slit42 S and is connected to a portion of the endless belt 70 between the driving pulley 71 and the driven pulley 72. The second wall portion 42 is provided with a lifting guide section 75. The lifting guide section 75 is a rail-like member whose longitudinal direction is the upper and lower directions. The sliding portion 74 is slidable in the upper and lower directions along the lifting guide section 75.

A basic action of the document feed tray lifting mechanism 33 is as follows. The driving force generated by the motor 78M is transmitted to the driving gear 71G via the worm gear 78W and the idler gear 78i. By rotating the driving pulley 71 together with the driving gear 71G, the endless belt 70 is rotated, and the driven pulleys 72 and 73 are rotated accordingly. Since the document feed tray 44 is connected to the endless belt 70 through the sliding portion 74, the forward and reverse rotations of the motor 78M cause the document feed tray 44 to rise and fall.

The control unit 2 controls the document feed tray lifting mechanism 33 so as to lift the document feed tray 44 as an amount of the document G stacked on the document feed tray 44 decreases. When the upper surface of the document G stacked on the document feed tray 44 is pressed against the pickup roller 51, the holder 53 swings upward. When the holder 53 is swung upward by a predetermined amount, the holder 53 blocks the light of the sensor 58. The control unit 2 stops the rise of the document feed tray 44 when the light of the sensor 58 is blocked. At this time, an appropriate load acts between the upper surface of the document G and the pickup roller 51, and the document G can be picked up by the pickup roller 51.

### <Conveying Mechanism>

A conveying mechanism 32 (see FIG. 5) includes the first conveying path 61, a second conveying path 62, and a third conveying path 63. The first conveying path 61 is provided substantially horizontally to the left side of a contact region between the retard roller 57 and the endless belt 56. The second conveying path 62 and the third conveying path 63 branch from a branch point B at a left end part of the first conveying path 61. The second conveying path 62 is curved downward from the branch point B (at a side of the document reading device 110), passes through the reading position A, and is provided toward the right side from the reading position A (at a side of the ejection tray 43). The third conveying path 63 is provided substantially horizontally toward the left side from the branch point B.

The first conveying path 61 includes a pair of conveying guides 61G facing to both surfaces of the document G conveyed in a predetermined conveyance direction Z (See FIGs 4, 7 and 8). The pair of conveying guides 61G face to each other in the upper and lower directions. In FIGs. 3 and 4, only the lower conveying guide 61G is shown. One of the conveying guides 61G (in the present embodiment, the lower conveying guide 61G) of the pair of conveying guides 61G is provided with a reading section 61R. The reading section 61R is, for example, a CIS (Contact Image Sensor), and is arranged so that a longitudinal direction thereof is the front and rear directions. The reading section 61R includes a contact glass 61C in contact with the document G. The other conveying guide 61G (in the present embodiment, the upper conveying guide 61G) is provided with a shading correction roller 61S. The shading correction roller 61S is white, which is a reference color for shading correction of the reading section 61R, and is in contact with the contact glass 61C.

A pair of first conveying rollers 64 are provided at the upstream side of the reading section 61R in the conveyance direction Z to hold and convey the document G. The pair of first conveying rollers 64 have a driving roller 64D driven by a motor or the like (not shown) and a driven roller 64N pressed by the driving roller 64D. The driving roller 64D is exposed from an opening 61A provided in the lower conveying guide 61G. In the present embodiment, the driving roller 64D is located below the first conveying path 61 and the driven roller 64N is located above the first conveying path 61, but the arrangement may be reversed.

The pair of first conveying rollers 64 are, for example, a pair of register rollers. A posture of the document G is corrected when the document G is abutted against the pair of first conveying rollers 64 which have stopped rotating, and then, the pair of first conveying rollers 64 rotate to convey the document G to the reading section 61R.

The pair of second conveyance rollers 65 are provided at the downstream side of the reading section 61R in the conveyance direction Z, and hold and convey the document G. The pair of second conveyance rollers 65 have a driving roller 65D driven by a motor or the like (not shown) and a driven roller 65N pressed by the driving roller 65D. The driving roller 65D is exposed from an opening 61B provided in the lower conveying guide 61G. In the present embodiment, the driving roller 65D is located below the first conveying path 61 and the driven roller 65N is located above the first conveying path 61, but the arrangement may be reversed.

The second conveying path 62 includes a pair of conveying guides 62G facing to both surfaces of the document G conveyed (see FIG. 4). In FIG. 4, only the conveying guide 62G at the lower side of a portion curved downward from the branch point B of the second conveying path 62 is shown. At a plurality of locations of the second conveying path 62, pairs of conveying rollers 66 are provided (see FIG. 5). The pairs of conveying rollers 66 have a driving roller 66D driven by a motor or the like (not shown) and a driven roller 66N pressed by the driving roller 66D. The driving roller 66D is exposed from an opening 62A provided in the lower conveying guide 62G. The second conveying path 62 is provided with a shading correction plate 62S facing to the opening 40A. A pair of ejection rollers 69 is provided at an end of the second conveying path 62 at a side of the ejection tray 43. When the second conveying path 62 is used, both sides of the document G can be read in one time of conveyance by using the reading section 61R and the document reading device 110.

The third conveying path 63 is provided with a reading section 63R and a shading correction roller 63S. The arrangement of the reading section 63R and the shading correction roller 63S is vertically opposite to the arrangement of the reading section 61R and the shading correction roller 61S of the first conveying path 61. At a left end part of the third conveying path 63, a pair of ejection rollers 63E are provided. The left end part of the third conveying path 63 penetrates a left side surface of the cover portion 46. When the third conveying path 63 is used, both sides of the document G can be read in one time of conveyance by using the reading section 61R and the reading section 63R.

At the branch point B, a switching section 67 is provided. The switching section 67 has a plate-shaped member swinging about an axis having an axial direction as the front and rear directions, and guides the document G conveyed from the first conveying path 61 to either the second conveying path 62 or the third conveying path 63. The second conveying path 62 and the third conveying path 63 are selectively used depending on the type of the document G. For example, the third conveying path 63 may be used in a case of the document G using general copy paper, but when the amount of the document G is large even if it is general copy paper, the second conveying path 62 in which the document G is ejected to the large-capacity ejection tray 43 is preferable. On the other hand, the third conveying path 63, which is linearly continuous with the first conveying path 61, is suitable for the document G made of cardboard or resin and having a bending rigidity so large that it cannot pass through the second conveying path 62.

In a case of a small-sized hard document, such as a business card, an identification card, or an IC (Integrated Circuit) card, the third conveying path 63 is preferable. As a typical example, a resin card having a short side of 53.98 mm, a long side of 85.60 mm, and a thickness of 0.76 mm as specified by ISO (International Organization for Standardization) / IEC (International Electrotechnical Commission) 7810 is known, and is used for a driver's license, a bank cash card, a credit card, or the like. The size of the business card is commonly a size of a so-called No. 4 sized business card with a short side of 55 mm and a long side of 91 mm in Japan. Incidentally, the small-sized hard document in the present embodiment is not limited to the above-described example, and generally, a document G having a short side of about 50 mm to 70 mm is to be read.

### <Fixed Wall Portion, Lifted Wall Portion>

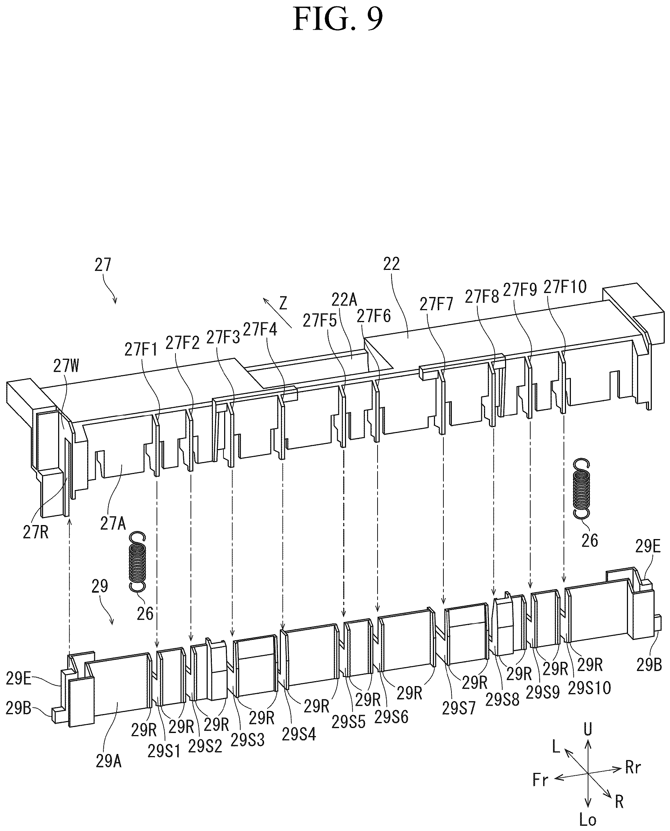

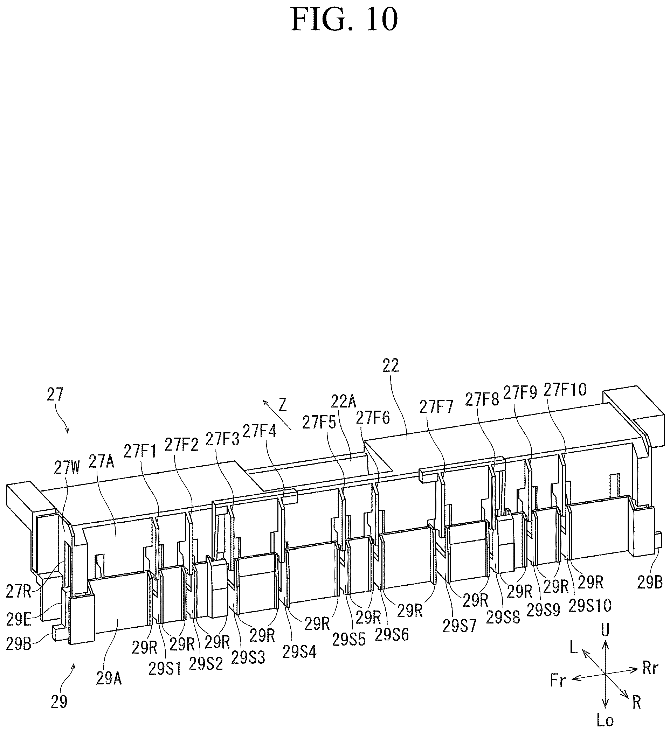

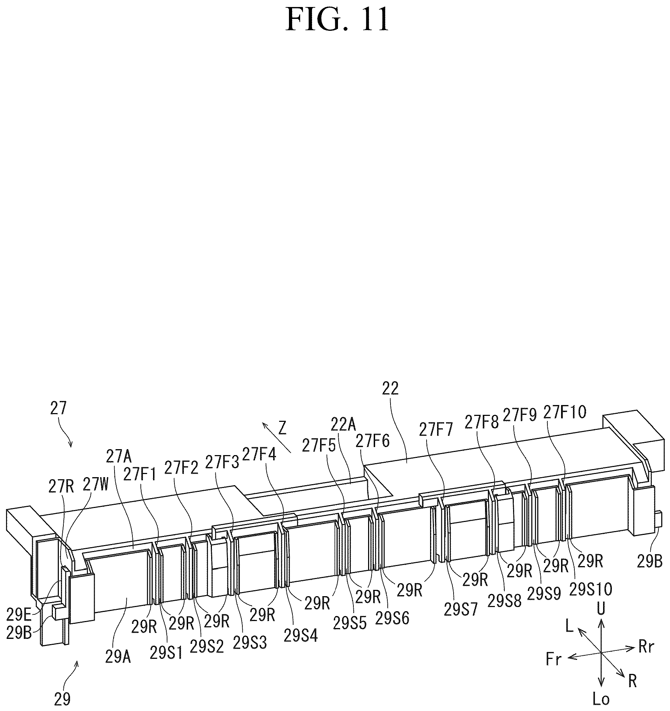

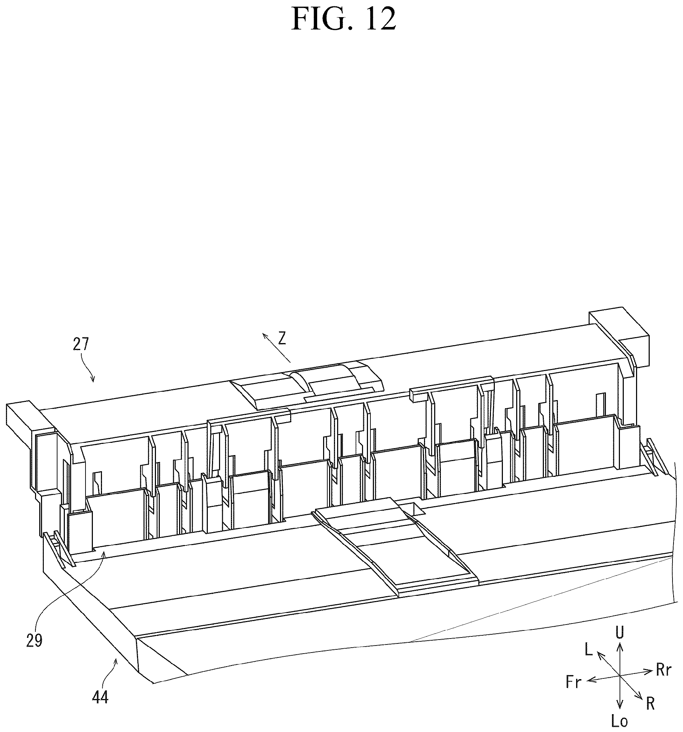

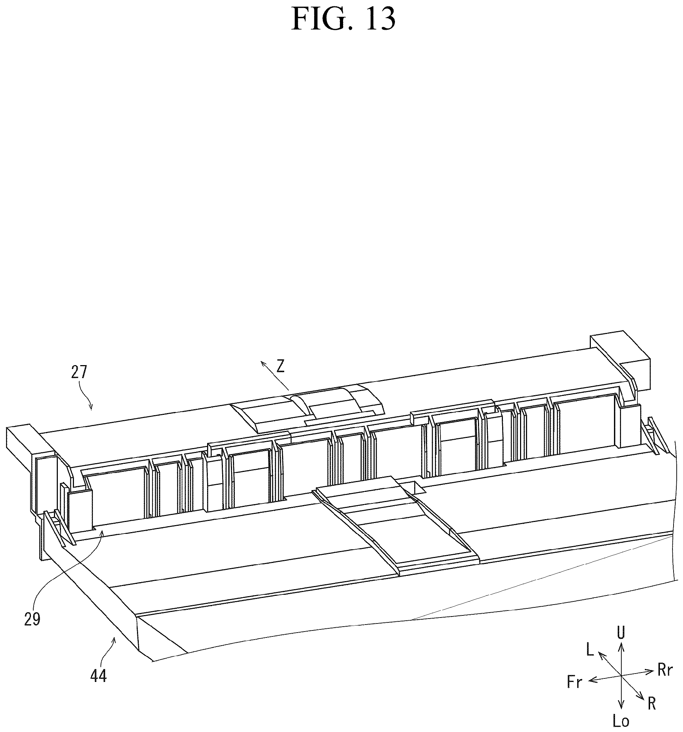

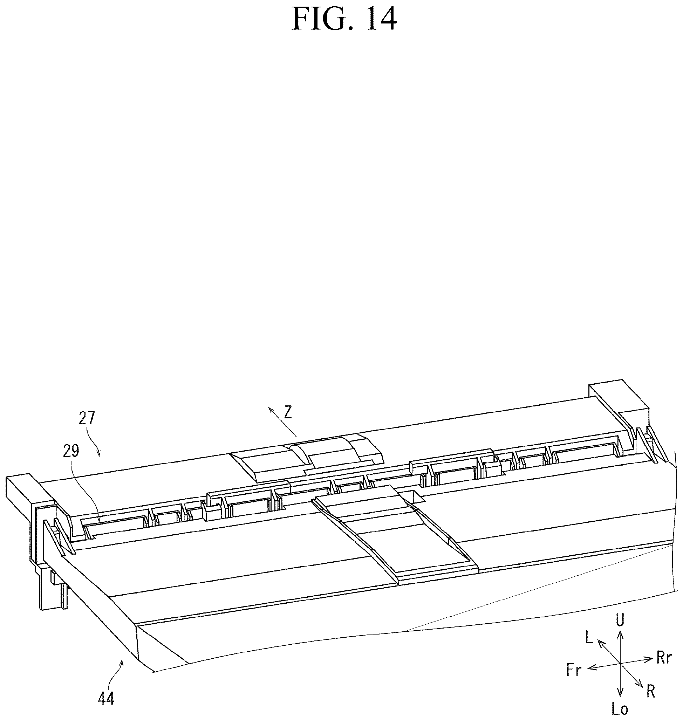

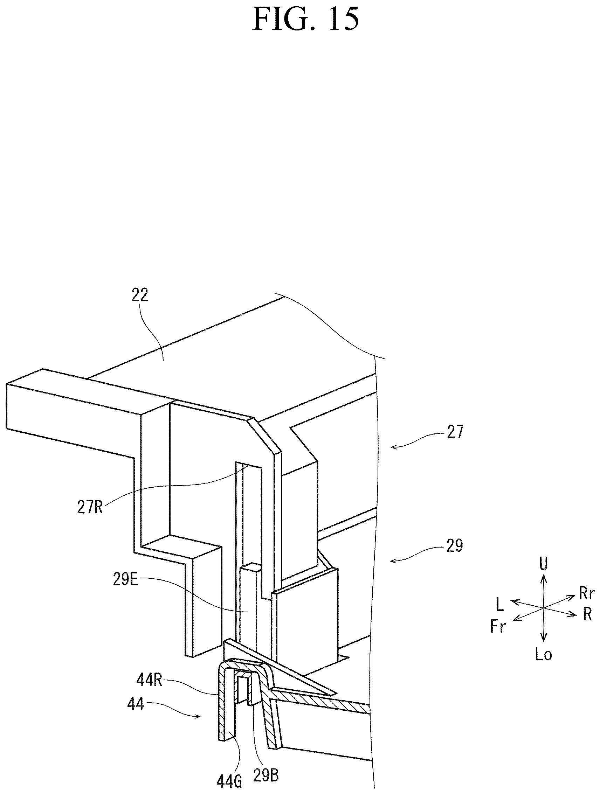

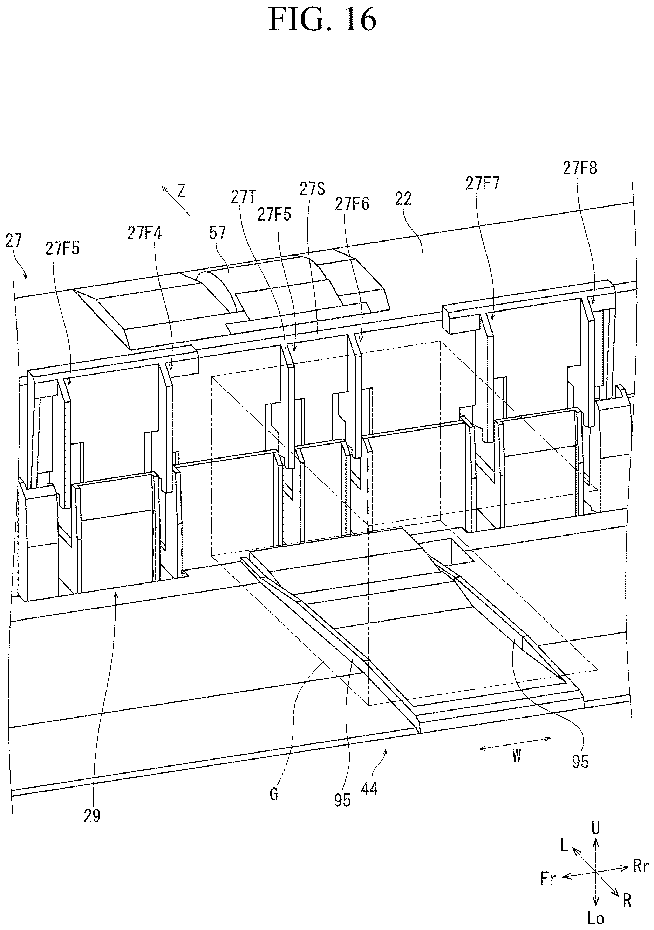

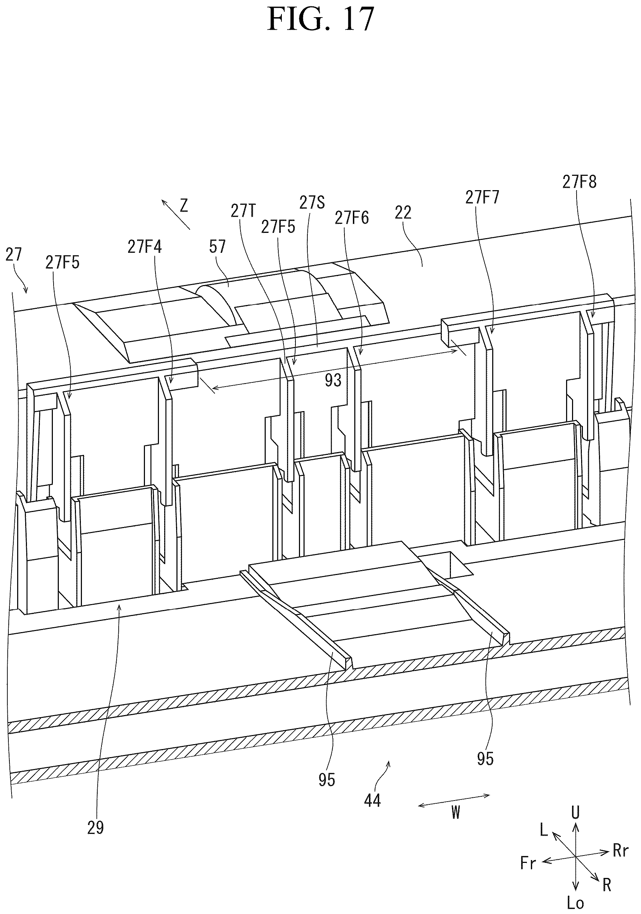

FIG. 9 is an exploded view showing a fixed wall portion 27 and a lifted wall portion 29. FIG. 10 is a perspective view showing the fixed wall portion 27 and the lifted wall portion 29 (at a lower limit position). FIG. 11 is a perspective view showing the fixed wall portion 27 and the lifted wall portion 29 (at an upper limit position). FIG. 12 is a perspective view showing the fixed wall portion 27, the lifted wall portion 29 (at the lower limit position), and the document feed tray 44 (in an engaged state). FIG. 13 is a perspective view showing the fixed wall portion 27, the lifted wall portion 29 (at the upper limit position), and the document feed tray 44 (in the engaged state). FIG. 14 is a perspective view showing the fixed wall portion 27, the lifted wall portion 29 (at the upper limit position), and the document feed tray 44 (in a separated state). FIG. 15 is a perspective view showing the lifted wall portion 29 and a cross section of a front portion of the document feed tray 44. FIG. 16 is an enlarged perspective view of a central portion of FIG. 12. FIG. 17 is a perspective view showing a cross section of a rib 95.

The document conveying device 120 is provided with the document feed tray 44 on the documents G are stacked, the document feeding mechanism 31 for feeding the document G stacked on the document feed tray 44 in the predetermined conveyance direction Z, the document feed tray lifting mechanism 33 for lifting and lowering the document feed tray 44, a conveying guide 22 which is provided at the downstream side of the document feed tray 44 in the conveyance direction Z and faces to a lower surface of the documents G to be fed, the fixed wall portion 27 which is provided below an end part of the conveying guide 22 at the upstream side of the conveyance direction Z and whose position is fixed, and the lifted wall portion 29 which is provided above an end part at the downstream side in the conveyance direction Z of the document feed tray 44, faces to the fixed wall portion 27 at the upstream side of the conveyance direction Z than the fixed wall portion 27, and lifts and lowers along the fixed wall portion 27 together with the document feed tray 44. The lifted wall portion 29 has slits 29S1 to 29S10 extending in the upper and lower directions, the fixed wall portion 27 has fins 27F1 to 27F10 extending in the upper and lower directions, upper ends of the slits 29S1 to 29S10 are opened in the upper and lower directions, and the fins 27F1 to 27F10 protrude to the upstream side of the conveyance direction Z and are arranged inside the slits 29 S1to 29S10.

### <Conveying Guide>

The conveying guide 22 (see FIGs. 9 to 15) is provided substantially horizontally. At a center of the conveying guide 22 in the front and rear directions, an opening 22A is provided. An upper part of the retard roller 57 is exposed upward from the opening 22A. The document G picked up by the pickup roller 51 is conveyed in a predetermined conveyance direction Z along an upper surface of the conveying guide 22.

### <Fixed Wall Portion>

The fixed wall portion 27 includes a main body portion 27A and a plurality of fins 27F1 to 27F10. The main body portion 27A is a generally rectangular plate-shaped portion having a thickness direction in the left and right directions and a longitudinal direction in the front and rear directions. The main body portion 27A is provided below the end part of the conveying guide 22 at the upstream side in the conveyance direction Z, and its position is fixed. The fins 27F1, 27F2, 27F3, 27F4, 27F5, 27F6, 27F7, 27F8, 27F9, and 27F10 are plate-like members and have a longitudinal direction in the upper and lower directions and a thickness direction in the front and rear directions. The fins 27F1 to 27F10 are provided on the right surface (a surface at the upstream side in the conveyance direction Z) of the main body portion 27A, and protrude rightward (to the upstream side in the conveyance direction Z). The fins 27F1 to 27F10 are provided at a plurality of positions in the front and rear directions (the width direction W of the document G crossing the conveyance direction Z).

At an upper end part of a right surface of the fixed wall portion 27, an inclined surface 27S is formed so that the downstream side of the conveyance direction Z becomes higher. The inclined surface 27S is continued to the upper surface of the conveying guide 22. Upper end surfaces 27T of the fins 27F1 to 27F10 are inclined so as to be higher at the downstream side in the conveyance direction Z, and forms the same surface as the inclined surface 27S.

### <Lifted Wall Portion>

The lifted wall portion 29 includes a main body portion 29A and a plurality of slits 29S1 to 29S10. The main body portion 29A is a generally rectangular plate-shaped portion having a thickness direction in the left and right directions and a longitudinal direction in the front and rear directions. The main body portion 29A is provided upward from an end part at the downstream side in the conveyance direction Z of the document feed tray 44, and faces to the fixed wall portion 27 at the upstream side of the fixed wall portion 27 in the conveyance direction Z. The slits 29S1, 29S2, 29S3, 29S4, 29S5, 29S6, 29S7, 29S8, 29S9 and 29S10 are provided at a plurality of positions in the front and rear directions, and the fins 27F1 to 27F10 are provided at a plurality of positions corresponding to each of the slits 29S1 to 29S10. The slits 29S1 to 29S10 have a longitudinal direction in the upper and lower directions and penetrate in the left and right directions. Upper ends of the slits 29S1 to 29S10 are opened in the upper and lower directions.

The fins 27F1 to 27F10 are respectively arranged inside the slits 29S1 to 29S10. Edge parts 29R of the slits 29S1 to 29S10 protrude to the upstream side in the conveyance direction Z. Proximal ends of the fins 27F1 to 27F10 and proximal ends of the edge parts 29R on both sides of the fins 27F1 to 27F10 form substantially the same surfaces.

The arrangement of the plurality of fins 27F1 to 27F10 and the plurality of slits 29S1 to 29S10 is determined in accordance with the size of the document G assumed to be read by the document conveying device 120. The document G is stacked at the center of the document feed tray 44 in the front and rear directions. When the document G of a minimum size (For example, a plastic card with a short side of 53.98 mm, a long side of 85.60 mm and a thickness of 0.76 mm according to ISO/IEC 7810) is stacked with its long side parallel to the conveyance direction Z, the two fins 27F5 and 27F6 closest to the center contact the short side of the document G. On the other hand, when the document G of a maximum size (For example, A3 size) is stacked with its long side parallel to the conveyance direction Z, all the fins 27F1 to 27F10 contact the short side of the document G. That is, the plurality of fins 27F1 to 27F10 and the plurality of slits 29S1 to 29S10 are arranged so that at least two fins are in contact with the document G stacked on the document feed tray 44.

### <Side Wall Portion, Restriction Portion>

A side wall portion 27W is provided in an upright posture downward from both front and rear ends of the conveying guide 22. The side wall portion 27W is integrated with the conveying guide 22 and the fixed wall portion 27. A restriction portion 27R is a slit provided in the side wall portion 27W along the upper and lower directions. An upper end part of the restriction portion 27R is closed, and a lower end thereof is opened.

### <End Portion, Protrusion Portion>

Front and rear end portions 29E of the lifted wall portion 29 are inserted into the restriction portion 27R and slide in the upper and lower directions along the restriction portion 27R. Since the upper end part of the restriction portion 27R is closed, the end portion 29E comes into contact with the upper end part of the restriction portion 27R, thereby stopping lift of the lifted wall portion 29. The protrusion portions 29B protrude forward and backward from the front and rear end portions 29E of the lifted wall portion 29, respectively.

### <Biasing Member >

The biasing member 26 (see FIG. 9) is a tension coil spring. An upper end part of the biasing member 26 is attached to a lower surface of the conveying guide 22. A bottom plate (not shown) is provided from a lower end part to the left side of the lifted wall portion 29, and a lower end part of the biasing member 26 is attached to an upper surface of the bottom plate. Since the position of the conveying guide 22 is fixed, the lifted wall portion 29 is biased upward.

### <Engaging Portion>

The engaging portion 44R (see FIG. 15) protrudes from both front and rear end parts on the downstream end of the document feed tray 44 in the conveyance direction Z. In the figure, only the front engaging portion 44R is shown, but the rear engaging portion 44R is similarly configured. The engaging portion 44R includes a recess portion 44G opened downward. When the protrusion portion 29B of the lifted wall portion 29 is accommodated in the recess portion 44G, the engaging portion 44R engages with the protrusion portion 29B.

As described above, since the lifted wall portion 29 is biased upward by the biasing member 26, the protrusion portion 29B is pressed upward against the recess portion 44G. With this configuration, the lifted wall portion 29 protrudes upward by a predetermined height from an end part at the downstream side of the document feed tray 44 in the conveyance direction Z, and the lifted wall portion 29 is lifted and lowered following lift of the document feed tray 44 by the document feed tray elevating mechanism 33.

### <Action of Lifted Wall Portion>

FIGs. 10, 12, and 16 show a state in which the document feed tray 44 is lowered to a lowest position by the document feed tray lifting mechanism 33. At this time, the capacity of the document feed tray 44 is maximum. The engaging portion 44R is engaged with the protrusion portion 29B (in am engaged state), and the lifted wall portion 29 is pushed down to the lower limit position by the document feed tray 44. In the lower limit position, lower end parts of the fins 27F1 to 27F10 enter the slits 29S1 to 29S10. Among the stacked documents G (see FIG. 16), the document G facing to the lifted wall portion 29 contact the edge parts 29R of the slits 29S1 to 29S10, and the document G facing to the fixed wall portion 27 contact the fins 27F1 to 27F10. Since the proximal ends of the fins 27F1 to 27F10 and the proximal ends of the edge parts 29R on both sides of the fins 27F1 to 27F10 form substantially the same surface, the ends of the documents G at the downstream side in the conveyance direction Z are aligned.

When the document feed tray 44 is lifted by the document feed tray lifting mechanism 33, the lifted wall part 29 is also lifted together with the document feed tray 44. When the front and rear end portions 29E of the lifted wall portion 29 contact the upper end part of the restriction portion 27R (See FIGs. 11 and 13), lift of the lifted wall portion 29 is stopped. The position of the lifted wall portion 29 at this time is the upper limit position. In the upper limit position, the entire fins 27F1 to 27F10 enter the slits 29S1 to 29S10. Since the proximal ends of the fins 27F1 to 27F10 and the proximal ends of the edge parts 29R on both sides of the fins 27F1 to 27F10 form substantially the same surface, the ends of the document G at the downstream side in the conveyance direction Z are aligned.

When the document feed tray 44 is further lifted, the recess portion 44G of the engaging portion 44R is separated from the protrusion portion 29B of the lifted wall portion 29 (in the separated state), and only the document feed tray 44 is lifted while the lifted wall portion 29 remains at the upper limit position. FIG. 14 shows a state in which the document feed tray 44 is lifted to a highest position by the document feed tray lifting mechanism 33.

As described above, the control unit 2 controls the document tray lifting mechanism 33 so as to lift the document tray 44 as the amount of documents G stacked on the document feed tray 44 decreases. The control is performed so that the upper surface of the document G stacked on the document feed tray 44 is always positioned at the height shown in FIG. 16, and the upper surface of the document G is pressed against the pickup roller 51. The upper surface of the document is positioned at a height substantially equal to end parts of upper end surfaces of the fins 27F1 to 27F10 at the upstream side in the conveyance direction Z. As described above, the upper end surfaces of the fins 27F1 to 27F10 are inclined so as to be higher at the downstream side in the conveyance direction Z, and form the same surface as the inclined surface 27S. Therefore, the document G is smoothly fed from the document feed tray 44 toward the conveying guide 22.

FIG. 16 shows a state in which the documents G of the minimum size described above are fully loaded in the document feed tray 44 in a state of the maximum capacity. The pickup roller 51 picks up the uppermost document G in the conveyance direction Z. When a plurality of documents G are picked up in an overlapped state, the documents G other than the uppermost document are stopped by the retard roller 57, and only the uppermost document G is conveyed in the conveyance direction Z by the endless belt 56 and fed into the first conveying path 61.

### <Projection Portion>

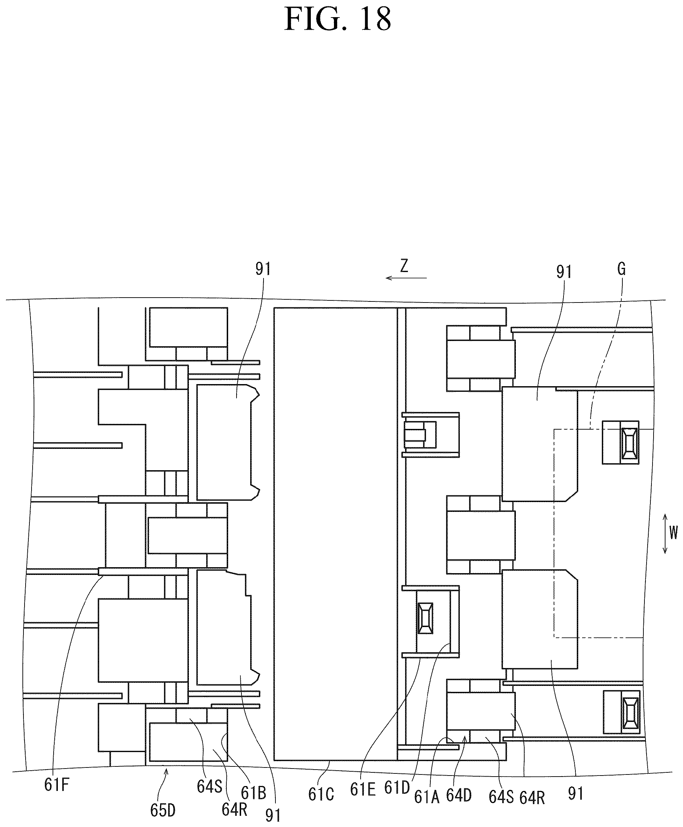

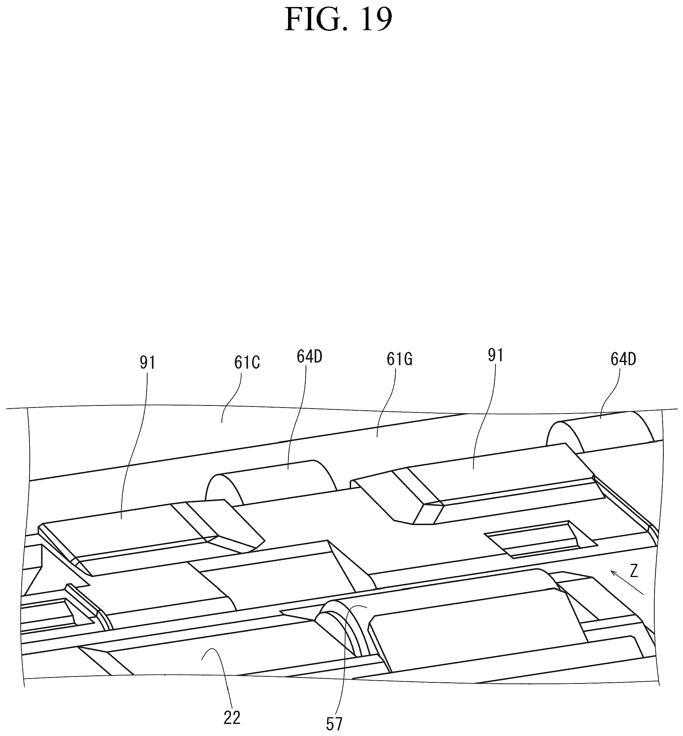

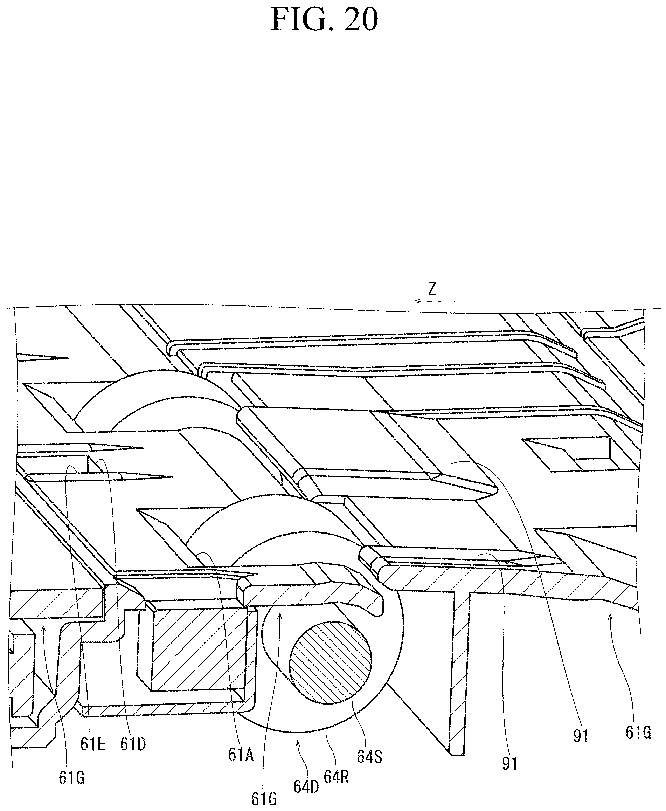

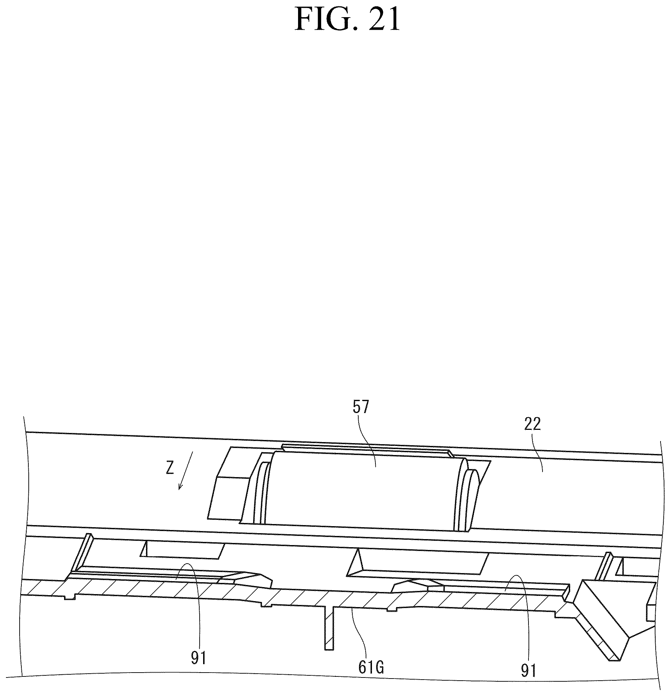

FIG. 18 is a plan view showing the projection portion 91. FIG. 19 is a perspective view showing the projection portion 91. FIG. 20 is a perspective view showing a cross section of the projection portion 91. FIG. 21 is a perspective view showing a cross section of the projection portion 91.

In the first conveying path 61, the document G to be conveyed may come into contact with the upper and lower conveying guides 61G. The conveying guide 61G is not flat and has various concavity and convexity of various sizes. The concavity is, for example, an opening 61D (see FIG. 18) where a sensor for detecting the document G is disposed, and the convexity is, for example, ribs 61E and 61F formed along the conveyance direction Z.

Since the document G, such as general copy paper, made of a flexible material is bent following the concavity and convexity of the conveying guide 61G even when it comes into contact with them, the document G is hardly damaged. However, in the case of the small-sized hard document G, such as the business card, an identification card, or an IC card, there is a possibility that the document G is damaged by rubbing against the concavity and convexity of the conveying guide 61G. Therefore, the document conveying device 120 according to the present embodiment has the following configuration.

The conveying guide 61G is provided with the projection portion 91. The projection portion 91 has a shape projected from the conveying guide 61G, and contacts a part including both ends of a recording surface of the small-sized document G in the width direction W intersecting the conveyance direction Z (see FIG. 18). The projection portion 91 is formed in a rectangular shape having a dimension in the front and rear directions longer than a dimension in the conveyance direction Z.

The projection portion 91 is provided at least at one position (in the present embodiment, two positions) in the conveyance direction Z of the conveying guide 61G. The projection portion 91 is provided at the upstream side of a pair of conveying rollers (generic term for the pair of first conveying rollers 64 and the pair of second conveying rollers 65) in the conveyance direction Z. In the present embodiment, projection portions 91 are provided at the upstream side of the pair of first conveying rollers 64 in the conveyance direction Z and at the upstream side of the pair of second conveying rollers 65 in the conveyance direction Z. As an example of the "the upstream side of the pair of conveying rollers in the conveyance direction Z", in an example of FIG. 18, the projection portion 91 is positioned closer to the document feed tray 44 than the center of the shaft 64S of the pair of conveying rollers. In the width direction W, the projection portion 91 is arranged so as not to overlap with a roller body 64R. The projection portion 91 is arranged so as to overlap a part of the roller body 64R in the conveyance direction Z.

With the above-described configuration of the projection portion 91, the projection portion 91 contacts a part including both ends in the width direction W of the recording surface (in this example, a bottom face) of the small-sized document G that has entered the first conveying path 61. In other words, the part including both ends in the width direction W of the document G rides on the projection portion 91. Subsequently, the document G is conveyed in the conveyance direction Z by the pair of first conveying rollers 64. In this case, since a part of the document G risen on the projection portion 91 is floated from the conveying guide 61G, friction between the document G and the ribs 61E is reduced. The document G that has passed through the reading section 61R is conveyed by the pair of second conveying rollers 65, and similarly here, since the part of the document G risen on the projection portion 91 is floated from the conveying guide 61G, so friction between the document G and the ribs 61F is reduced.

### <Recess Portion>

At a boundary between an upper end part of the fixed wall portion 27 and an end part at the upstream side in the conveyance direction Z of the conveying guide 22, a recess portion 93 (see FIG. 17) having a width in the width direction W crossing the conveyance direction Z larger than that of a small-sized document G is provided. Since the small-sized document G (see FIG. 16) picked up by the pickup roller 51 passes through the inside of the recess portion 93 and is fed to the conveying guide 61G, the small-sized document G can be prevented from deviating in the width direction W. Further, since the inclined surface 27S and the upper end surface 27T forming a top surface of the recess portion 93 are inclined so that the downstream side is higher than the upstream side in the conveyance direction Z, the small-sized document G can be smoothly fed to the conveying guide 22.

### <Rib>

The document feed tray 44 is provided with a pair of ribs 95 provided at a position in contact with the lower surface of the small-sized document G and along the conveyance direction Z. The ribs 95 come into contact with the document G at a slightly inner side than both ends of the document G in the width direction W. The documents G stacked on the ribs 95 are placed in a posture in which an end part at the downstream side in the conveyance direction Z are slightly lifted upward. Therefore, the small-sized document G can be smoothly fed to the conveying guide 22.

### <Cursor>

The document feed tray 44 is provided with cursors 45 contacting end parts of the document G in the width direction W crossing the conveyance direction Z, and the cursors 45 can contact the small-sized document G. Specifically, the dimension of the cursor 45 in the conveyance direction Z is longer at the downstream side in the conveyance direction Z in comparison with cursors of a conventional document conveying device. Therefore, the small-sized document G can be aligned at an appropriate position in the width direction W.

The document conveying device 120 according to the present embodiment described above is provided with the document feed tray 44 on which the document G is stacked, the pickup roller 51 for picking up the document G stacked on the document feed tray 44 in the predetermined conveyance direction Z, the conveying guide 61G provided at the downstream side of the pickup roller 51 in the conveyance direction Z and facing to the recording surface of the document G, and the projection portion 91 having a shape projected from the conveying guide 61G and contacting a part of the recording surface of the small-sized document G including both ends of the width direction W intersecting the conveyance direction Z. According to the present embodiment, it is possible to suppress damage to the document G when the small-sized hard document G is conveyed. In addition, according to the present embodiment, it is possible to suppress disturbance of the posture of the document G when the small-sized hard document G enters the conveying guide 61G.

In the document conveying device 120 according to the present embodiment, the projection portion 91 is provided at least at one position in the conveyance direction Z. According to the present embodiment, it is possible to suppress damage to the document G when the small-sized hard document G is conveyed.

The document conveying device 120 according to the present embodiment is provided with the pair of conveying rollers (the pair of first conveying rollers 64 and the pair of second conveying rollers 65) provided at the downstream side of the pickup roller 51 in the conveyance direction Z for holding and conveying the document G, and the projection portion 91 is provided at the upstream side of the pair of conveying rollers in the conveyance direction Z. According to the present embodiment, since the part of the document G floats from the conveying guide 61G before being held by the pair of conveying rollers, friction between the document G and the conveying guide 61G can be reduced.

The document conveying device 120 according to the present embodiment includes the wall portion (the fixed wall portion 27) provided above the end part at the downstream side of the conveyance direction Z of the document feed tray 44, the upper end part of the wall portion is continued to the end part at the upstream side in the conveyance direction Z of the conveying guide 61G, and the recess portion 93 having a width in the width direction W larger than that of the small-sized document G is provided at the boundary between the upper end part of the wall portion and the end part at the upstream side in the conveyance direction Z of the conveying guide 61G. According to the present embodiment, it is possible to prevent the small-sized hard document G from deviating in the width direction W.

In the document conveying device 120 according to the present embodiment, the recess portion 93 is inclined so that the downstream side is higher than the upstream side in the conveyance direction Z. According to the present embodiment, the small-sized document G can be smoothly fed to the conveying guide 22.

In the document conveying device 120 according to the present embodiment, the document feed tray 44 is provided with the pair of ribs 95 along the conveyance direction Z provided at the position in contact with the lower surface of the small-sized document G. According to the present embodiment, the small-sized document G can be smoothly fed to the conveying guide 22.

In the document conveying device 120 according to the present embodiment, the document feed tray 44 is provided with the cursor 45 contacting the end of the document G in the width direction W, and the cursor 45 can contact the small-sized document G. According to the present embodiment, the small-sized document G can be aligned at an appropriate position in the width direction W.

The above-described embodiment may be modified as follows.

Although the above-described embodiment represents an example that the projection portion 91 is provided on the lower conveying guide 61G, the projection portion 91 may be provided on the upper conveying guide 61G. According to this configuration, since the friction between the concavity and convexity of the upper conveying guide 61G and the document G is reduced, it is possible to suppress damage of the document G when the small-sized hard document G is conveyed.

## Claims

1. A document conveying device (120) comprising:
a document feed tray (44) on which a document (G) is stacked;
a pickup roller (51) for picking up the document (G) stacked on the document feed tray (44) in a predetermined conveyance direction (Z);
a conveying guide (61G) provided at a downstream side of the pickup roller (51) in the conveyance direction (Z) and facing to a recording surface of the document (G); and
a projection portion (91) having a shape projected from the conveying guide (61G) and contacting a part of the recording surface of the small-sized document (G) including both ends of a width direction (W) intersecting the conveyance direction (Z).

2. The document conveying device (120) according to claim 1, wherein
the projection portion (91) is provided at least at one position in the conveyance direction (Z).

3. The document conveying device (120) according to claim 1 or 2 comprising:
a pair of conveying rollers (64) provided at a downstream side of the pickup roller (51) in the conveyance direction (Z) for holding and conveying the document (G),
wherein the projection portion (91) is provided at an upstream side of the pair of conveying rollers (64) in the conveyance direction (Z).

4. The document conveying device (120) according to claim 1, wherein
the projection portion (91) is formed in a rectangular shape having a dimension in the width direction (W) longer than the dimension in the conveyance direction (Z).

5. The document conveying device (120) according to claim 1, wherein
the projection portion (91) is arranged so as not to overlap a roller body (64R) of the pair of conveying rollers (64) in the width direction (W) but to overlap a part of the roller body (64R) in the conveyance direction (Z).

6. The document conveying device (120) according to claim 1 or 2 comprising:
a wall portion (27) provided above an end part at a downstream side of the conveyance direction (Z) of the document feed tray (44),
wherein an upper end part of the wall portion (27) is continued to an end part at an upstream side in the conveyance direction (Z) of the conveying guide (61G), and
a recess portion (93) having a width in the width direction (W) larger than that of the small-sized document (G) is provided at a boundary between the upper end part of the wall portion (27) and the end part at the upstream side in the conveyance direction (Z) of the conveying guide (61G).

7. The document conveying device (120) according to claim 6, wherein
the recess portion (93) is inclined so that a downstream side is higher than an upstream side in the conveyance direction (Z).

8. The document conveying device (120) according to claim 1 or 2, wherein
the document feed tray (44) is provided with a pair of ribs (95) along the conveyance direction (Z) provided at a position in contact with a lower surface of the small-sized document (G).

9. The document conveying device (120) according to claim 1 or 2, wherein
the document feed tray (44) is provided with a cursor (45) contacting an end of the document (G) in the width direction (W), and
the cursor (45) is configured to contact the small-sized document (G).
